# EUROPEAN PATENT SPECIFICATION

(11) **EP 2 619 144 B1**
(45) Date of publication and mention of the grant of the patent: **20.08.2014**
(21) Application number: 11758471.4
(22) Date of filing: 20.09.2011
(51) Int. Cl.: C02F 1/66, C02F 1/58, C02F 3/28, C02F 101/10, C02F 101/16

(54) **METHOD FOR PURIFYING WASTEWATER WITH AMMONIUM REMOVAL**
VERFAHREN ZUR REINIGUNG VON ABWASSER MIT AMMONIUMENTFERNUNG
MÉTHODE DE PURIFICATION DES EAUX USÉES AVEC ÉLIMINATION D'AMMONIUM

(30) Priority: 21.06.2011 WO PCT/EP2011/060326; 20.09.2010 EP 10009936
(43) Date of publication of application: 31.07.2013
(73) Proprietor: Akwadok BVBA, 8540 Deerlijk (BE)
(72) Inventor: MOERMAN, Wim, B-8540 Deerlijk (BE)
(74) Representative: BiiP cvba
(86) International application number: PCT/EP2011/066330
(87) International publication number: WO 2012/038431

(56) References cited:
- EP-A1- 0 490 396
- EP-A2- 0 915 058
- DE-A1- 3 732 896
- US-A1- 2005 051 495
- US-A1- 2008 073 265
- US-B1- 6 287 471
- ZHANG ET AL: "Repeated use of MgNH4PO4.6H2O residues for ammonium removal by acid dipping", DESALINATION, ELSEVIER, AMSTERDAM, NL, vol. 170, no. 1, 22 October 2004 (2004-10-22), pages 27-32, XP005890880, ISSN: 0011-9164, DOI: DOI:10.1016/J.DESAL.2003.12.009 cited in the application
- MICHALOWSKI T ET AL: "A thermodynamic study of struvite+water system", TALANTA, ELSEVIER, AMSTERDAM, NL, vol. 68, no. 3, 15 January 2006 (2006-01-15), pages 594-601, XP025001001, ISSN: 0039-9140, DOI: DOI:10.1016/J.TALANTA.2005.04.052 [retrieved on 2006-01-15]
- SUGIYAMA ET AL: "Removal of aqueous ammonium with magnesium phosphates obtained from the ammonium-elimination of magnesium ammonium phosphate", JOURNAL OF COLLOID AND INTERFACE SCIENCE, ACADEMIC PRESS, NEW YORK, NY, US, vol. 292, no. 1, 1 December 2005 (2005-12-01), pages 133-138, XP005126330, ISSN: 0021-9797, DOI: DOI:10.1016/J.JCIS.2005.05.073
- ULUDAG-DEMIRER S ET AL: "Removal of ammonium and phosphate from the supernatant of anaerobically digested waste activated sludge by chemical precipitation", BIORESOURCE TECHNOLOGY, ELSEVIER BV, GB, vol. 100, no. 13, 1 July 2009 (2009-07-01) , pages 3236-3244, XP026063275, ISSN: 0960-8524, DOI: DOI:10.1016/J.BIORTECH.2009.02.030 [retrieved on 2009-03-21]

## Description

### Technical Field

The present invention relates to a process of purification of wastewater (with a high content of ammonium and/or phosphate ions) by precipitation of magnesium ammonium phosphate (MgNH₄PO₄.6H₂0) (MAP) and subsequent transformation of the MAP in to a magnesium hydro phosphate.

### Background for the invention

With increasing population and increasing industrialization, wastewater treatment has become one of the most important challenges for safeguarding the environment. Although the treatment of wastewater to an environmentally acceptable water effluent is possible at date, the challenge emerges to diversify and recover the side products generated during wastewater treatment, without thereby compromising the quality of water effluent.

At present, the side products essentially comprise fertilizers (e.g. magnesium ammonium phosphate - MAP) and fuels. With the increasing amount of wastewater treated, it is likely that an overproduction of fertilizers will occur.

The article *"*Repeated use of MgNH4PO4.6H2O residues for ammonium removal by acid dipping" by Zhang et al. (Desalination, pages 27-32, vol. 170 (2004)) concerns the transformation of MAP to MgHPO₄ by releasing ammonia under acidic condition. According to this Zhang et al. (2004) ammonium is released from MAP by adjusting the pH-value in an acidolysis tank to a value of 5,5 or lower by addition of HCl and by adjusting the temperature in the acidolysis tank to above 25°C, thereby generating an impure NH₄Cl due to organic impurities present in the MAP produced from the treated wastewater. Purification of the impure NH₄Cl is known to be rather difficult and energy consuming. Moreover, hazardous concentrated HCl solution is needed, thereby giving rise to special and costly storage precautions (high acid resistant containers).

US 5,407,655 describes removing ammonium from wastewater by reacting the wastewater with pure carbon dioxide or a gaseous mixture rich in carbon dioxide to obtain ammonium carbonate. This solution however does not address the removal of phosphate from the wastewater.

EP 0,915,058 concerns a process of purification of wastewater with a high content of ammonium ions by precipitation of magnesium ammonium phosphate (MgNH₄PO₄.6H₂0) and subsequent transformation of the magnesium ammonium phosphate (MAP) in to magnesium hydro phosphate by heat treatment solely, without any pH correction.

US 6,287,471 concerns a process of purification of wastewater wherein CO₂ is used to lower the pH-value of the wastewater in order to actively prevent production of MAP during the purification process.

The present invention provides for an unknown diversity of easily obtainable side products with a high purity and with the possibility to lower process cost (no external acids required / no special storage precautions for high acid reagents) and to reduce the ecological footprint.

### Summary of the invention

The present invention concerns a process of purification of waste water by precipitation of magnesium ammonium phosphate (MgNH₄PO₄.6H₂0), in which (a) the content of the waste water is determined for the N:P ratio, in which (b) an excess of a magnesium oxide and/or magnesium ions is added and adjustment is made to a predetermined pH-value above 7, in which (c) magnesium ammonium phosphate precipitates in a reactor out of the mixture with the predetermined pH-value and whereby magnesium ammonium phosphate is withdrawn from the reactor into an acidolysis tank, in which (d) adjustment is made to a pH-value below 6,5 in the acidolysis tank, in which (e) magnesium hydro phosphate (MgHPO₄) precipitates in the acidolysis tank out of the mixture with the pH-value below 6,5 and this magnesium hydro phosphate is withdrawn from the acidolysis tank, as is an ammonium containing effluent, characterized in that the pH-value in the acidolysis tank is adjusted by injection of carbon dioxide.

### Preferred processes according to the present invention are those wherein either:

The acidic pH-value comprised in the range below 6,5, preferably below 5,5 and most preferable a pH-value of about 4,8 and in that CO₂ is used as acidifying agent, at least part of which CO₂ is produced during a fermentation process or anaerobic digestion.

The magnesium ammonium phosphate withdrawn from the reaction container is mixed with water, preferably demineralized water.

Water is heated to a temperature above 25°C, preferably above 40°C and more preferably to 60°C or higher before mixing the magnesium ammonium phosphate therein.

The waste water to be purified is an effluent from an anaerobic digestion process generating carbon dioxide.

The carbon dioxide injected in the acidolysis tank is generated in the anaerobic digestion process.

The carbon dioxide is injected in the acidolysis tank as biogas or fermentation off-gass.

The carbon dioxide is stripped from an effluent of an anaerobic digestion process; and said stripped carbon dioxide is injected in the acidolysis tank.

The carbon dioxide is injected under a pressure of at least 0,1 bar, preferably at least 1 bar overpressure.

The generated magnesium hydro phosphate is circulated to the precipitation reactor.

### Brief description of the Figure

For a better understanding of the nature of the present invention, reference is made to the following detailed description taken in conjunction with the accompanying,
Figure 1, which schematically shows a waste water purification process according to the present invention;
Figure 2, which schematically represents an alternative of Figure 1.

### Detailed description of the invention

The present invention concerns a process of purification of waste water by precipitation of magnesium ammonium phosphate (MgNH₄PO₄.6H₂0), in which (a) the content of the waste water is determined for the N:P ratio, in which (b) an excess of a magnesium oxide and/or magnesium ions is added and adjustment is made to a predetermined pH-value above 7, in which (c) magnesium ammonium phosphate precipitates in a reactor out of the mixture with the predetermined pH-value and whereby magnesium ammonium phosphate is withdrawn from the reactor into an acidolysis tank, in which (d) adjustment is made to a pH-value below 6,5 in the acidolysis tank, in which (e) magnesium hydro phosphate (MgHPO₄) precipitates in the acidolysis tank out of the mixture with the pH-value below 6,5 and this magnesium hydro phosphate is withdrawn from the acidolysis tank, as is an ammonium containing effluent, characterized in that the pH-value in the acidolysis tank is adjusted by injection of carbon dioxide.

### Anaerobic Digestion

The waste water to be purified according to the present invention preferably originates from an anaerobic digestion of waste. By "waste" is meant both solid and liquid waste from animals (e.g. manure, urine, etc.); municipal waste, like sewage; agro-industrial waste; or an industrial effluent. Such waste may be from any type of animal, and will usually be from animals that are raised in large groups (e.g. for commercial purposes) where large amounts of waste are generated and disposal is a problem. Examples of such animals include but are not limited to cattle, pigs, horses, sheep, goats, chickens, turkeys, geese, etc. In addition, many processes now involve a co-digestion approach where a mixture of animal manure and organic fraction municipal solids such as food scraps and food processing waste are comingled and digested. The technology is particularly suited to handle waste from large agricultural operations that raise significant numbers of animals, e.g. CAFOs. However, use of the method need not be confined to agricultural endeavors or to the treatment of animal waste. For example, the methods may also be adapted and utilized by zoos, animal parks, or other organizations that care for multiple animals, or by municipalities to process human waste, etc. Further, other types of waste products such as the aforementioned organic fraction of municipal solids or combinations thereof with manures may also be processed by anaerobic digestion.

Those of skill in the art are familiar with anaerobic digestion and various methods and apparatuses for carrying out anaerobic digestion of waste. Briefly, anaerobic digestion is a process in which microorganisms break down biodegradable material in the absence of oxygen. Initially, bacteria hydrolyze the insoluble organic polymers (e.g. carbohydrates) in the waste material, thereby making them available for other bacteria. Acidogenic bacteria then convert the hydrolysis products (e.g. sugars and amino acids) into carbon dioxide, hydrogen, ammonia, and organic acids. Acetogenic bacteria then convert the organic acids into acetic acid, along with additional ammonia, hydrogen, and carbon dioxide. Finally, methanogenic bacteria convert these products to methane, which can be recovered as biogas, and carbon dioxide. Anaerobic digestion may be carried out, for example, using a variety of designs and methodologies as described in Metcalf and Eddy (2003). The gaseous methane (biogas) produced by anaerobic digestion is impure due to the presence of contaminants such as CO₂, and H₂S. The anaerobic digestion effluent contains solids and particulate matter with large amounts of ammonia and potentially phosphorous, which must be removed.

### MAP production

Solids and particulate matter present in the anaerobic digestion effluent, further more generally defined as liquid, may be removed by known separation techniques such as filter screens, belt press, sedimentation, etc. After the separation step the anaerobic digestion effluent is fed into a stripping reactor to remove carbon dioxide from said effluent.

By aerating the liquid or by agitation of the liquid in the stripping reactor, CO₂ is removed and the pH increases. The pH is preferably increased and maintained between about 7.5 and 11, more preferably between about 8 and 9. The CO₂ is preferably collected in a gas reservoir, while the liquid is guided from the stripping reactor to a precipitation reactor.

The stripping reactor is preferably made airtight, thereby allowing collecting the stripped carbon dioxide. From the stripping reactor, the liquid is fed into a precipitation reactor. In this precipitation reactor, it is preferred to analyse the ammonium-content and phosphatecontent of the liquid.

Based on the measured ammonium and/or phosphate content, ammonium and/or phosphate may be added to the effluent to achieve a 1:1 stoichiometry nitrogen to phosphor in the precipitation reactor. In case magnesium (Mg) is not present in the liquid, or there is a deficiency of Mg in the liquid, also Mg may be added to the precipitation reactor. The Mg source may comprise at least one of MgO, MgCl₂ and/or Mg(OH)₂, etc. In case Mg(OH)₂ is used as Mg source, it is preferred that the average particle size of the Mg(OH)₂ powder is in the range of about 1 to 2 microns allowing obtaining MAP with a particle size of 2 to 5 microns (cf. US 6,476,082). Preferably MgCl₂ is used as Mg source, thereby allowing precipitation of MAP due to MAP crystallization.

In the precipitation reactor it is preferred to ensure that the liquid contains an excess to stoichiometry of magnesium relative to phosphate and ammonium, wherein the stoichiometry is related to the stoichiometry of MAP (MgNH₄PO₄ (which may also contain crystal water: usually MgNH₄PO₄.6H₂O)). This may require measuring the concentrations of the respective species (NH₄⁺, PO₄³⁻ and Mg) and when necessary adding ammonium, phosphate and/or magnesium in order to get the desired excess (an excess to stoichiometry with respect to MAP). The phrase "excess to stoichiometry of ammonium and magnesium relative to phosphate, wherein the stoichiometry is related to the stoichiometry of MAP" in this context means that depending upon the concentration of phosphate, or where applicable the concentration of phosphate and ammonium, depending upon the temperature and pH, and depending upon a potentially desired (or required) phosphate excess in the effluent of the reactor, the amount of magnesium (magnesium available for the formation of MAP), or the amount of ammonium (ammonium available for the formation of MAP), and where applicable the amount of magnesium and ammonium, to be added to the liquid is chosen such that the formation of MAP is promoted and the desired phosphate concentration in the effluent is obtained.

Preferably, the excess magnesium is about 1.1-10 times the amount of phosphate (molar ratio's of Mg/PO4³⁻ of 1.1-10), more preferably 1.5-5. For this purpose, the precipitation reactor and/or tubes or pipes to and from the reactor may comprise means for measuring the concentration of NH4⁺, PO4³⁻ and/or Mg and for measuring the pH, temperature and/or oxygen concentration. These means are known to the person skilled in the art. Ensuring that the liquid in the precipitation reactor contains the necessary relative amounts of NH4⁺, PO4³⁻ and Mg, suitable for the production of MAP, may also comprise an occasional or periodical estimation of the concentration, e.g. by taking samples.

In an embodiment of the invention, the liquid, like e.g. a effluent of an anaerobic digestion, is a stream of water containing ammonium, BOD and phosphate, wherein usually ammonium is already present in an excess relative to phosphate (with respect to the stoichiometry of MAP). Such liquid may also contain magnesium. Small particle sized magnesium hydroxide powder (particles in the range of about 1 to about 2 microns) is added under high shear mixing conditions such that it is ensured that the liquid in the reactor contains an excess of magnesium relative to the stoichiometry of MAP (i.e. a molar excess of magnesium relative to phosphate). Hence, it is ensured that the amount of magnesium present in the precipitation reactor is present in a molar excess to phosphate, which is to be removed as MAP.

. Due to the pH rise obtained in the stripping reactor or due to the pH value of the liquid in reactor (potentially by further pH correction by addition of a base such as NaOH, solid material is formed in the reactor during gentle agitation. This solid material comprises MAP, formed from NH4⁺, PO4³⁻ and Mg. However, suitable pH values also depend upon the temperature. The values of about 7.5 and 11, more preferably between about 8 and 9, are related to a process that is typically performed at room temperature, e.g. about 20°C. When higher temperatures are used e.g. at about 35°C, the pH value may be chosen higher, e.g. about 8.5 to 10 such that MAP is (efficiently) formed and the desired phosphate concentration in the reactor effluent is obtained (i.e. the maximum phosphate concentration that is allowed, e.g. because of environmental regulations, or otherwise desired).

### Mg recirculation / ammonium removal

The MAP is batch wise discharged from the reactor and collected in an acidolysis tank. In the acidolysis tank, the MAP is mixed with an amount of demineralized or deionized water that is preheated to a temperature of at least 25°C, more preferably at least 40°C and most preferably at least 60°C.

According to the invention, a gas comprising CO₂ is fed at the bottom of the acidolysis tank. The said carbon dioxide preferably is generated at the above mentioned stripping reactor or is fed to the acidolysis tank as biogas generated during the anaerobic digestion. The CO₂ comprising gas is injected under conditions in which it exerts a chemical reaction, the said chemical reaction being reflected in particular by a lowering of the pH in the liquid in the acidolysis tank. To exert such a chemical reaction, it is dissolved in the liquid and generates (bi)carbonates (bicarbonates and carbonates) and/or carbonic acid therein, resulting in the desired pH decrease.

The CO₂ comprising gas is fed in a volume to obtain a pH-value below 6,5, preferably below 5,5 and even more preferably a pH-value about 4,8.

Under the above conditions in the acidolysis tank, ammonium is efficiently removed from MAP, while the phosphate is kept in the residual precipitations (mainly MgHPO₄.3H₂O). The released ammonium is transferred from the solid MAP phase to the liquid phase in the acidolysis tank under the surprisingly pure form of (NH₄)₂CO₃ and/or NH₄HCO₃.

The MgHPO₄.3H₂O can be recirculated to the precipitation reactor as a source of Mg and phosphate, thereby limiting the amount of external Mg needed.

An advantage of the method according to the present invention in view of other waste water treatment processes incorporating MAP production and Mg recirculation is that ammonium is obtained in a relative pure form of (NH₄)₂CO₃ and/or NH₄HCO₃. After further purification by sublimation (NH₄)₂CO₃ and NH₄HCO₃ have industrial applications as smelling salt; as leaving agent in specific recipes such as Icelandic loftkökur (air biscuits) or as a fertilizer in the agro-industry.

Another advantage of the process according to the present invention is that, contrary to most other ammonium salts, (NH₄)₂CO₃ and/or NH₄HCO₃ are instable at higher temperatures and decompose in NH₃, CO₂ and H₂O. As such, by additional alkaline stripping of the decomposed (NH₄)₂CO₃ and/or NH₄HCO₃ highly pure (NH₄)₂SO₄ can be obtained.

Yet another advantage is that the obtained ammonium composition can be readily further be treated by the Anammox process^{®} (Delft University of Technology; WO 98/07664; EP 0,327,184), which is impossible when starting from (NH₄)Cl and/or (NH₄)₂SO₄ due to too elevated osmotic pressure on the bacteria involved in the Anammox process, if concentrated acids are used instead of CO₂.

In case the obtained liquid (NH₄)₂CO₃ is further dried and solidified, the present process allows for a netto nitrogen removal and CO₂ sequestration which is considered positive for the slowing down the greenhouse effect.

It is clear from the above that the process according to the present invention allows for an unknown diversity of easily obtainable side products with a high purity and with the possibility to lower process cost (no external acids required / no special storage precautions for high acid reagents) and to reduce the ecological footprint.

### Example 1

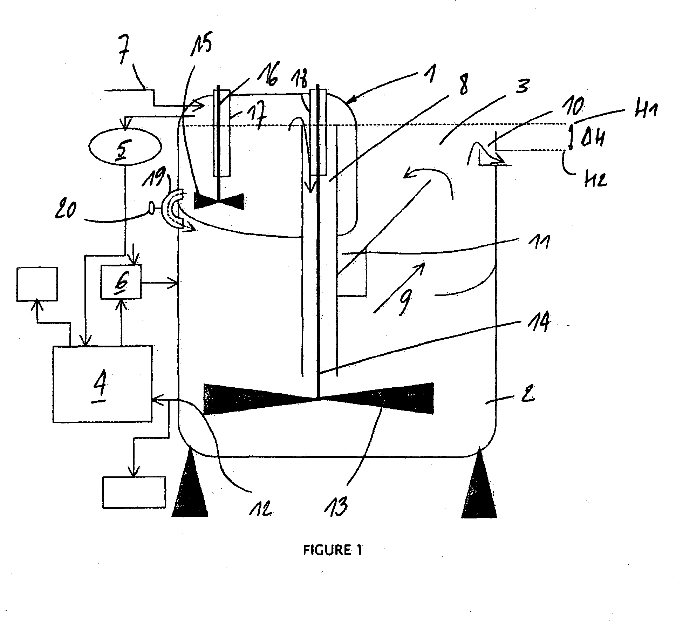

Figure 1 schematically represents the main reactions involved in a process of purification of wastewater according to the present invention;

As represented in figure 1, the device comprises a stripping reactor 1, a precipitation reactor 2, a sedimentation tank 3, a acidolysis tank 4, a gas reservoir 5 and a magnesium storage tank 6.

In the represented embodiment, the stripping reactor 1, the precipitation reactor 2 and the sedimentation tank 3 are incorporated in one single vertically positioned construction, wherein the stripping reactor 1 and sedimentation tank 3 are positioned on top of the reactor 2.

The stripping reactor 1 is an airtight sealed tank with an inlet 7 for waste water to be purified and an outlet 8 towards the reactor 2. The outlet 8 is formed by a vertical tube 8 with an open end positioned at a height H1 in the stripping reactor 1 and extending downwards into the precipitation reactor 2.

The sedimentation tank 3 is an open tank with an inlet 9 in its bottom wall and an outlet 10 for clarified effluent at a height H2 that is positioned lower than the outlet 8 of the mixing tank. The difference in height between H1 and H2 is further defined as ΔH. The sedimentation tank 3 further comprises a second outlet 11 for recirculation of sediment to the reactor 2.

The precipitation reactor 2 comprises a sealable outlet 12 for removal of accumulated solids such as MAP and an inlet for adding a Mg source such as MgCl₂ and/or recycled magnesium hydrophosphate and/or a nitrogen source and/or phosphate ions a base such as NaOH.

Both the stripping reactor 1 and the precipitation reactor 2 are equipped with stirring means, wherein the stirring means 13 of the reactor 2 are driven by a shaft 14 extending through the tube 8' and an opening the top wall of the stripping reactor 1, and wherein the stirring means 15 of the stripping reactor 1 are driven by a shaft 16 that preferably extends through an opening the top wall of the stripping reactor tank. Both openings in the top wall of the stripping reactor 1 are preferably provided with a downwardly extending tube 17-18, wherein the lower end of the tube is situated below the level H1, i.e. below the liquid level in the stirring reactor 1 during normal use of the device, thereby allowing airtight sealing of the stripping reactor versus said both openings provided in its top wall.

The airtight sealing of the stripping reactor allows for the accumulation of gas in the stripping reactor above the liquid level at H1. A third opening with an exhaust valve allows for the removal of gas from the stripping reactor to the gas reservoir 5.

Finally a pipeline 19 is provided that fluidly connects the stripping reactor 1 with the precipitation reactor 2, which pipeline is provided with an adjustable valve 20.

The process for purifying wastewater according to the invention with use of the above device comprises feeding a liquid (e.g. the effluent of an anaerobic digestion) to the stripping reactor CO₂ is removed from the liquid and accumulated in the gas reservoir 5 through the exhaust valve. The liquid is further guided to the precipitation reactor where where the ammonium and or phosphate content is measured and magnesium, ammonium and/or phosphate are added. MAP is formed under gentle stirring and at a pH-value of the liquid above 7 thereby removing ammonium and phosphate from the liquid. Due to the difference in water level ΔH in the construction, the fluid is forced upwards to the sedimentation tank 3, where eventual sediments are recirculated to the reactor 2, while purified liquid leaves the device.

In case the level of suspended solids (SS) other than MAP in the reactor exceeds a predetermined level, the valve 20 is opened, thereby creating a flush from the stripping reactor, through the reactor towards the outlet 10 of the sedimentation tank 3, thereby allowing to remove the SS that might hinder MAP production. The flush flow is driven by the initial ΔH hydraulic level difference. By controlling opening percentage of the valve 20 the flow rate during flush mode can be adjusted.

A major advantage of specifically the above device is that the stripping, precipitation reactor and sedimentation tank together form a single mobile construction that can be easily transported on a truck or ship, and installed on a desired spot without the need for on-place building. It is to be noted that as such the dimensionally largest parts of the device can be readily assembled in a production hall, thereby increasing reliability of the device, reducing capex and installation cost.

### Example 2

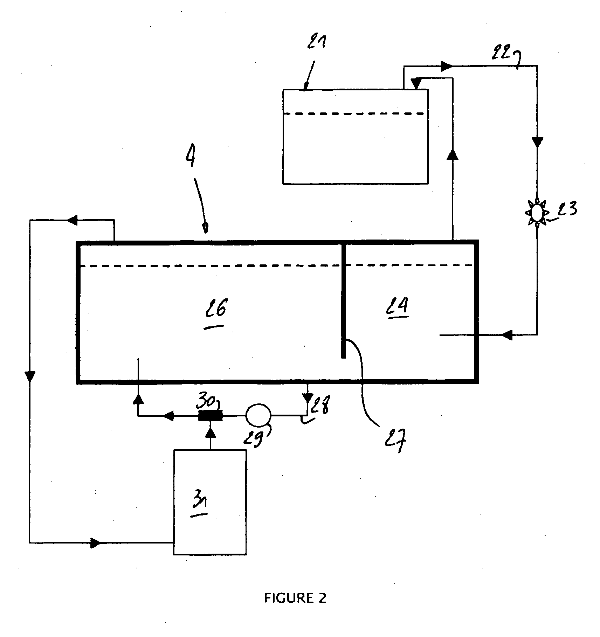

Figure 2 represents an embodiment of either an airtight bioreactor 21 generating biological CO₂ or the CO₂ stripper being part of the device depicted in Figure 1. This reactor 21 is divided in a lower part containing the liquid phase and an upper part containing the CO₂ enriched gas phase. The gas phase is withdrawn form reactor 21 by means of gas conduct 22 connected to a gas compressor 23. The gas compressor injects the gas mixture in a first compartment 24 of the acidolysis tank 4 containing water. During the passage trough compartment 24 CO₂ is absorbed. This first compartment is separated form a second compartment 26 by a vertical baffle 27 keeping both upper gas chambers of compartments 24 and 26 of the acidolysis tank 4 separate. The gas chamber of compartment 24 is connected by gas duct 25 with the gas chamber of anaerobic digestion reactor 21 or stripping reactor 21. The vertical baffle 27 ensures that the residual gas stripped of part of the initial CO₂ does re-enter the gas chamber of reactor 21 and does not mix with the content of gas chamber of compartment 26. By conduct 28 water is withdrawn form the compartment 26 and is re-injected in compartment 26 passing a venturi device 30 using pump 29. The venturi device sucks in air liberated in a thermolysis struvite reactor 31. The gas chamber form compartment 26 is connected to the same thermolysis reactor 31, this ensures NH₃ enriched air to pass trough the heated struvite mass and transferring this NH₃ to the liquid phase of compartment 26.

## Claims

1. A process of purification of waste water by precipitation of magnesium ammonium phosphate (MgNH₄PO₄.6H₂0), in which (a) the content of the waste water is determined for the N:P ratio, in which (b) an excess of a magnesium oxide and/or magnesium ions is added and adjustment is made to a predetermined pH-value above 7, in which (c) magnesium ammonium phosphate precipitates in a reactor out of the mixture with the predetermined pH-value and whereby magnesium ammonium phosphate is withdrawn from the reactor into an acidolysis tank, in which (d) adjustment is made to a pH-value below 6,5 in the acidolysis tank, in which (e) magnesium hydro phosphate (MgHPO₄) precipitates in the acidolysis tank out of the mixture with the pH-value below 6,5 and this magnesium hydro phosphate is withdrawn from the acidolysis tank, as is an ammonium containing effluent, **characterized in that** the pH-value in the acidolysis tank is adjusted by injection of carbon dioxide.

2. The process according to claim 1, in which the acidic pH-value is comprised in the range below 6,5, preferably below 5,5 and most preferable a pH-value of about 4,8 and in that CO₂ is used as acidifying agent, at least part of which CO₂ is produced during a fermentation process or anaerobic digestion.

3. The process according to claim 1, in which the magnesium ammonium phosphate withdrawn from the reaction container is mixed with water, preferably demineralized water.

4. The process according to claim 3, in which said water is heated to a temperature above 25°C, preferably above 40°C and more preferably to 60°C or higher before mixing the magnesium ammonium phosphate therein.

5. The process according to claim 1, in which the waste water to be purified is an effluent from an anaerobic digestion process generating carbon dioxide.

6. The process according to claim 5, in which the carbon dioxide injected in the acidolysis tank is generated in the anaerobic digestion process.

7. The process according to claim 1, in which the carbon dioxide is injected in the acidolysis tank as biogas or fermentation off-gas.

8. The process according to claim 1, wherein carbon dioxide is stripped from an effluent of an anaerobic digestion process; wherein said stripped carbon dioxide is injected in the acidolysis tank.

9. The process according to claim 1, in which the carbon dioxide is injected under a pressure of at least 0,1 bar, preferably at least 1 bar overpressure.

10. The process according to claim 1, in which the generated magnesium hydro phosphate is circulated to the reactor stage.

## Patentansprüche

1. Ein Prozess zur Reinigung von Abwasser durch Ausfällung von Magnesiumammoniumphosphat (MgNH₄PO₄6H₂0), worin (a) der Inhalt des Abwasser durch das Verhältnis N:P bestimmt wird, worin (b) ein Überschuss an einem Magnesiumoxid und/oder an Magnesiumionen beigemischt und eine Einstellung auf einen vordefinierten pH-Wert über 7 vorgenommen wird, worin (c) das Magnesiumammoniumphosphat in einem Reaktionsbehälter außerhalb des Gemischs mit dem vordefinierten pH-Wert ausgefällt wird, und wobei das Magnesiumammoniumphosphat aus dem Reaktionsbehälter in einen Säurehydrolysetank geleitet wird, worin (d) die Einstellung auf einen pH-Wert unter 6,5 im Säurehydrolysetank durchgeführt wird, worin (e) das Magnesiumhydrophosphat (MgHPO₄) im Säurehydrolysetank aus dem Gemisch mit dem pH-Wert und 6,5 ausgefällt wird, und dieses Magnesiumhydrophosphat aus dem Säurehydrolysetank als Abwasser mit Ammoniumgehalt entnommen wird;
**dadurch gekennzeichnet, dass** der pH-Wert im Säurehydrolysetank durch die Einspritzung von Kohlendioxid eingestellt wird.

2. Der Prozess gemäß Anspruch 1, worin der azidische pH-Wert im Bereich unter 6,5, vorzugsweise unter 5,5 und besonders vorzugsweise einem pH-Wert von 4,8 entspricht, und CO₂ als Säuerungsmittel verwendet wird, wobei mindestens ein Teil dieses CO₂ bei einem Fermentationsprozess oder einer anaeroben Faulung erzeugt wird.

3. Der Prozess gemäß Anspruch 1, worin das aus dem Reaktionsbehälter entnommene Magnesiumammoniumphosphat mit Wasser, vorzugsweise entmineralisiertes Wasser, gemischt wird.

4. Der Prozess gemäß Anspruch 1, worin das Wasser auf eine Temperatur über 25°C, vorzugsweise über 40°C und besonders vorzugsweise auf 60°C oder darüber erwärmt wird, bevor das Magnesiumammoniumphosphat darin gemischt wird.

5. Der Prozess gemäß Anspruch 1, worin das zu reinigende Abwasser ein Abwasser aus einem anaeroben Faulungsprozess ist, bei dem Kohlendioxid entsteht.

6. Der Prozess gemäß Anspruch 5, worin das Kohlendioxid, das in den Säurehydrolysetank eingespritzt wird, im anaeroben Faulungsprozess entsteht.

7. Der Prozess gemäß Anspruch 1, worin das Kohlendioxid als Biogas oder Fermentationsgas in den Säurehydrolysetank eingespritzt wird.

8. Der Prozess gemäß Anspruch 1, worin das Kohlendioxid aus dem Abwasser eines anaeroben Faulungsprozesses abgeschieden wird, wobei das abgeschiedene Kohlendioxid in den Säurehydrolysetank eingespritzt wird.

9. Der Prozess gemäß Anspruch 1, worin das Kohlendioxid mit einem Überdruck von mindestens 0,1 bar und vorzugsweise mindestens 1 bar eingespritzt wird.

10. Der Prozess gemäß Anspruch 1, worin das erzeugte Magnesiumhydrophosphat zur Reaktorstufe geleitet wird.

## Revendications

1. Procédé de purification d'eaux usées par précipitation de phosphate de magnésium ammonium (MgNH₄PO₄.6H₂O, dans lequel (a) la teneur en eaux usées est déterminée pour le rapport N:P, dans lequel (b) un excédent d'oxyde de magnésium et/ou d'ions magnésium est ajouté et un ajustement est réalisé à un pH prédéterminé supérieur à 7, dans lequel (c) le phosphate de magnésium aluminium précipite dans un réacteur du mélange ayant le pH prédéterminé, et dans lequel le phosphate de magnésium ammonium est retiré du réacteur dans une cuve d'acidolyse, dans lequel (d) l'ajustement est réalisé à un pH inférieur à 6,5 dans la cuve d'acidolyse, dans lequel (e) l'hydrogénophosphate de magnésium (MgHPO₄) précipite dans la cuve d'acydolyse du mélange ayant le pH inférieur à 6,5 et cet hydrogéno phosphate de magnésium est retiré de la cuve d'acidolyse en tant qu'effluent contenant de l'ammonium ;
**caractérisé en ce que** le pH dans la cuve d'acydolyse est ajusté par injection de dioxyde de carbone.

2. Procédé selon la revendication 1, dans lequel le pH acide est compris dans la plage inférieure à 6,5, de préférence, inférieure à 5,5 et de manière préférée entre toutes, un pH d'environ 4,8 et en ce que le C02 est utilisé comme agent acidifiant, au moins une partie dudit C02 étant produite pendant un processus de fermentation ou de digestion anaérobie.

3. Procédé selon la revendication 1, dans lequel le phosphate de magnésium ammonium retiré du conteneur réactionnel est mélangé à de l'eau, de préférence, de l'eau déminéralisée.

4. Procédé selon la revendication 3, dans lequel ladite eau est chauffée à une température supérieure à 25 C, de préférence, supérieure à 40 C et de manière davantage préférée, à 60 C ou supérieure avant d'ajouter le phosphate de magnésium ammonium dans celle-ci.

5. Procédé selon la revendication 1, dans lequel les eaux usées à purifier sont un effluent d'un processus de digestion anaérobie générant du dioxyde de carbone.

6. Procédé selon la revendication 5, dans lequel le dioxyde de carbone injecté dans la cuve d'acydolyse est généré dans le processus de digestion anaérobie.

7. Procédé selon la revendication 1, dans lequel le dioxyde de carbone est injecté dans la cuve d'acidolyse sous forme de biogaz ou de gaz de fermentation.

8. Procédé selon la revendication 1, dans lequel le dioxyde de carbone est entraîné d'un effluent d'un processus de digestion anaérobie ; dans lequel ledit dioxyde de carbone entraîné est injecté dans la cuve d'acidolyse.

9. Procédé selon la revendication 1, dans lequel le dioxyde de carbone est injecté sous une pression d'au moins 0,1 bar, de préférence d'au moins 1 bar de surpression.

10. Procédé selon la revendication 1, dans lequel l'hydrogénophosphate de magnésium généré circule dans l'étage du réacteur.
